# EUROPEAN PATENT APPLICATION

(11) **EP 3 062 212 A1**
(43) Date of publication of application: **31.08.2016**
(21) Application number: 16000421.4
(22) Date of filing: 20.02.2016
(51) Int. Cl.: G06F 3/12

(54) **TEXT EDITING APPARATUS AND PRINT DATA STORAGE APPARATUS**

(30) Priority: 25.02.2015 JP 2015035363; 26.02.2015 JP 2015036383
(71) Applicant: Kyocera Document Solutions Inc., Osaka-shi, Osaka 540-8585 (JP)
(72) Inventor: Tsuji, Chika, Osaka-shi, Osaka, 540-8585 (JP); Yoshida, Daisuke, Osaka-shi, Osaka, 540-8585 (JP); Nomura, Takashi, Osaka-shi, Osaka, 540-8585 (JP); Obayashi, Yuichi, Osaka-shi, Osaka, 540-8585 (JP); Takagi, Jumpei, Osaka-shi, Osaka, 540-8585 (JP); Minoru, Katsuhiro, Osaka-shi, Osaka, 540-8585 (JP); Nakamura, Takeshi, Osaka-shi, Osaka, 540-8585 (JP)
(74) Representative: Möbus, Steffen

(57) **Abstract**

The present invention relates to a text editing apparatus (100) that makes it unnecessary to reprint a print data. By a communication management part (102), the print data from a client terminal (300) and a correction candidate list including a correction target and a correction candidate from a data management server (200) are received. By a display management part (104), the correction candidate list is displayed on a display part (111). By an operation accepting part (105), it is accepted selection of the correction candidate in the correction candidate list displayed on the display part (111). By a correction reflecting part (106), the selected correction candidate is reflected to the print data. By an image formation part (107), image processing is performed to the print data where the correction candidate is reflected by the correction reflecting part (106). Then, it is outputted to a printer part (113).

## Description

### Field of the Invention

The present disclosure is related with a text editing apparatus and a print data storage apparatus suitable for accumulation of a print data.

### Background of the Invention

When a document is printed in a typical image forming apparatus, which are MFPs (Multi-Function Peripheral), such as a printer and a multifunction printer, a user may notice that a miswritten word, entry omission, or the like, exists after printing. In this case, after correcting the document data, it is printed by the image forming apparatus again. Also, in this case, if document data is one page, it is necessary to reprinting for the page. Also, even if document data is one page, in case that there is a lot of printing number of sheets, it is necessary to reprinting for the printing number of sheets. Also, if document data is two or more pages, other pages may be affected by correcting the corresponding section. For example, shifting the position of a character, or the like, may be happened. In this case, it is necessary to reprinting after the corrected page. In any case, a paper may be uselessly-used by reprinting the corrected document.

A typical print data editing apparatus that corrects such document data is proposed. In this apparatus, a corrected proof is scanned with an image scanner. Then, a correction-instructions data is obtained, a difference process is performed between RIP development data and it, and the difference data is extracted. The print data before correcting and the difference data are layered. A correction target layer is virtually divided in the shape of a grid, and a plurality of blocks are generated. Then, after obtaining layered data and area division data, the print data are corrected according to the correction instructions described in the difference layer.

Also, another typical printer is proposed. This apparatus compares the print data registered into former data memory and the data before-correction. Then, the mismatch section of the both data is served to a corresponding print head of yellow (Y), magenta (M), or cyan (C). Also, the coincident part of the both data is served to the print head of black (BK). Thereby, a printing mode of a correction part is changed.

### Summary of the Invention

A text editing apparatus according to the embodiment in the present disclosure comprises: a communication management part that performs a process to receives a print data from a client terminal and a correction candidate list including a correction target and a correction candidate from a data management server; a display management part that performs a process to display the correction candidate list on a display part; a selection accepting part that performs a process to accept selection of the correction candidate in the correction candidate list displayed on the display part; a correction reflecting part that performs a process to reflect selected correction candidate to the print data; and an image formation part that performs image processing for the print data reflected the correction candidate and performs a process to output to a printer part.

A print data storage apparatus according to the embodiment of the present disclosure comprises: a server data management part that performs a process to associates a print data with user information and to store in a memory part as an accumulation data; and a data comparison part that performs a process to compare the accumulation data with new print data, wherein the server data management part, based on result of comparison, performs a process to make a character string extracted from the accumulation data as a before-correction character string, to make a character string extracted from the new print data as an after-correction character string, to associate with the user information, and to manages.

### Brief Description of the Drawings

FIG. 1 shows a text editing system that is applied a text editing apparatus according to a first embodiment in the present disclosure;
FIG. 2 shows a configuration of principal part of the MFP and the data management server in FIG. 1;
FIG. 3 shows a correction candidate list made by the correction candidate making part in FIG. 2;
FIG. 4 shows an example of printing history data for each user stored in the data management server side in FIG. 1;
FIG. 5 shows an example of revision history data for each user stored in the data management server side in FIG. 1;
FIG. 6 shows steps of a process in the MFP side in FIG. 1;
FIG. 7 shows steps of a revision history accumulation process in the data management server side in FIG. 1;
FIG. 8 shows steps of a correction candidate list making process in data management server side in FIG. 1; and
FIG. 9 shows an example of revision history data for each user stored in the data management server side according to a second embodiment of the present disclosure.

### Detailed Description of the Invention

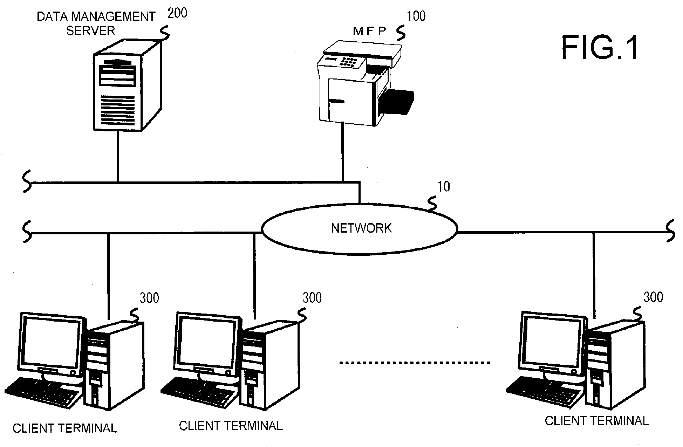

Hereinafter, a first embodiment of a text editing apparatus in the present disclosure is explained as refer to FIG. 1 - FIG. 8. FIG. 1 shows a text editing system applied the text editing apparatus in the present disclosure.

As shown in FIG. 1, the text editing system includes MFP (Multi-Function Peripheral) 100 that is the text editing apparatus, data management server 200, and client terminal 300. MFP 100, data management server 200, and client terminal 300 are connected via network 10.

Then, the print job including a printing request and a print data is transmitted from client terminal 300 to MFP 100. Then, a data retrieval request including the print data is advanced from MFP 100 to data management server 200. It describes later for details. Here, the data retrieval request is sent out to data management server 200 when accumulating a revision history of the print data. Also, the data retrieval request is sent out when requiring transmission of the after-mentioned correction candidate list 230.

Data management server 200 compares the print data with the accumulation data. Also, data management server 200 extracts the difference between these data. Also, data management server 200 makes the character string of this extracted accumulation data as a before-correction character string, makes the character string of the print data as an after-correction character string, and associates them with after-mentioned user information 220a. Then, data management server 200 manages this as revision history data 225 as described later. Also, data management server 200 compares the print data with revision history data 225, and transmits the after-mentioned correction candidate list 230 in connection with the correction to MFP 100. Also, after-mentioned correction candidate list 230 from data management server 200 is displayed on a touch panel MFP 100 side. Also, correction candidate 225c that is the character string selected from correction candidate list 230 by a user is reflected in the print data and is printed.

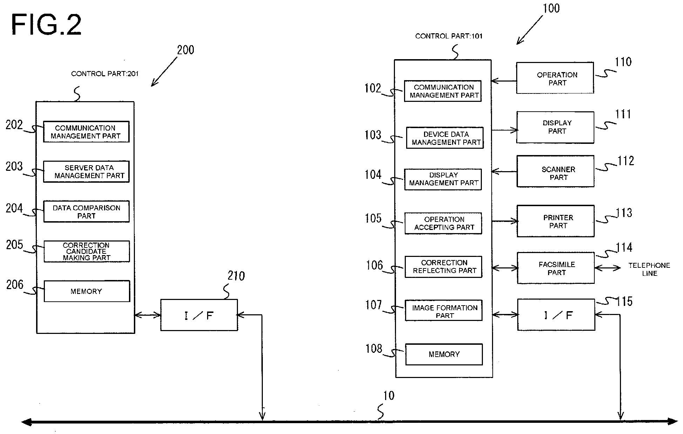

Then, with reference to FIG. 2, a configuration of the principal part of MFP 100 and data management server 200 is explained. Firstly, MFP 100 in the present embodiment is a text editing apparatus. MFP 100 includes control part 101, operation part 110, display part 111, scanner part 112, printer part 113, facsimile part 114, and I/F (interface) 115. Control part 101 performs a process that controls entire operation of MFP 100 based on a program in ROM (Read Only Memory). Control part 101 includes communication management part 102, device data management part 103 (device data management part), display management part 104, operation accepting part 105, correction reflecting part 106, image formation part 107, and memory 108. Communication management part 102, device data management part 103 (device data management part), display management part 104, operation accepting part 105, correction reflecting part 106, and image formation part 107 have a processor providing one or a plurality of circuits, such as Central Processing Unit (CPU), various programs can be read and executed, and the various programs previously embedded inside can also be executed. Here, the circuit can be the electronic parts to which a plurality of electronic devices are connected by wiring, or an electronic substrate.

Communication management part 102 receives the print job including the printing request and the print data from client terminal 300 via I/F 115. Device data management part 103 once stores the print data, which is received by communication management part 102, in memory 108. Also, device data management part 103 advances the data retrieval request to data management server 200. Also, device data management part 103 transmits the print data, which is received by communication management part 102, via I/F 115. In addition, in the data retrieval request, user information, a file type, a file name, or the like, which is about the transmitted print data from client terminal 300, are included. The user information is a user identifier (ID), or the like.

Also, device data management part 103 transmits the after-mentioned correction candidate 225c selected by the user to data management server 200 via I/F 115. Thereby, in the data management server 200 side, it can be grasped selection frequency of correction candidate 225c. Also, device data management part 103 transmits the after-correction print data where correction candidate 225c is reflected by correction reflecting part 106 to client terminal 300, which has been transmitted the before-correction print data, via I/F 115. Thereby, in the client terminal 300 side, the before-correction print data can be overwritten by the after-correction print data and can be stored the after-correction print.

Display management part 104 displays the after-mentioned correction candidate list 230 transmitted from data management server 200 on display part 111. Also, display management part 104 displays the contents of the file designation for printing on display part 111. Operation accepting part 105 accepts operation of the file designation for printing, or the like, by operation part 110, or the like. Also, operation accepting part 105 (selection accepting part) accepts selection of correction candidate 225c from the after-mentioned correction candidate list 230 by operation part 110.

Correction reflecting part 106 reads the print data stored in memory 108. Also, correction reflecting part 106 reflects selected correction candidate 225c from the after-mentioned correction candidate list 230 accepted by operation accepting part 105. Thereby, correction of print data is automatically performed before a start of printing.

Image formation part 107 performs image processing (rasterize) for the print data performed correction by correction reflecting part 106. Memory 108 has an area that stores the print data from client terminal 300, or the like.

Operation part 110 is an operation panel that is configured with a touch panel, for example. For the printing request for MFP 100, or the like, a login process is performed in order to retain utilization right for the user. At the time of the login process, operation part 110 accepts the input of a user ID, or the like. Also, when the login process is completed, file designation for a print data, or the like, can be performed. It is also possible to perform the login process by accessing from a portable terminal.

Display part 111 is a display panel that displays file designation for the print data to be printed, a message to guide the login, a file list for the print data that the user can print, or the like, Also, display part 111 displays the after-mentioned correction candidate list 230 transmitted from data management server 200, as mentioned above. Operation part 110 may serve as display part 111.

Scanner part 112 has a mechanism to convey a manuscript and inputs the image data of the manuscript read by an image sensor to control part 101. That is, scanner part 112 converts the image signal of the manuscript from the image sensor into a digital image data, and control part 101 inputs it, sequentially.

Printer part 113 has a mechanism that prints an image on a paper based on the image data outputted from control part 101.

Facsimile part 114 performs the process to transmit the image data outputted from control part 101 to a facsimile serving as the other party via a telephone line and also to receive the image data from the other party facsimile to be inputted into control part 101.

I/F 115 is connected to network 10 and allows transmission and reception of data between data management server 200, client terminal 300, and a portable terminal.

In addition, in a job of a copy function, the image data is inputted from scanner part 112 to memory 108 , and the image data is outputted from memory 108 to printer part 113. In a job of a print function, the image data rasterized by image formation part 107 is outputted to printer part 113. In a job of a scanner function, the image data is inputted into memory 108 from scanner part 112, and the image data is outputted from memory 108 to I/F 115.

In a job of a fax transmission function, image data is inputted from scanner part 112 (or I/F 115) to memory 108, and image data is outputted from memory 108 to facsimile part 114. In the job of a fax receiving function, image data is inputted from facsimile part 114 to memory 108, and image data is outputted from memory 108 to printer part 113.

On the other hand, data management server 200 has control part 201 and I/F (interface) 210. Control part 201 performs a process that controls entire operation for data management server 200 based on a program in ROM, HDD, or the like. Control part 201 includes communication management part 202, server data management part 203, data comparison part 204, correction candidate making part 205, and memory 206. Communication management part 202, server data management part 203, data comparison part 204, and correction candidate making part 205 has a processor, such as Central Processing Unit (CPU), having one or a plurality of circuits, various programs can be read and executed, and a embedded various programs can also be executed. Here, the circuit can be electronic parts where a plurality of electronic devices are connected by wiring or an electronic substrate.

Communication management part 202 receives the data retrieval request and the print data from MFP 100 via I/F 210. In addition, as mentioned above, in the data retrieval request, user information, a file type, a file name, or the like, which is about the print data transmitted from client terminal 300 are included. User information is a user ID, or the like. Also, communication management part 202 receives correction candidate 225c in correction candidate list 230 selected by the user in the MFP 100 side. In addition, about a concordance rate of the whole document, it does not limit to 80% or more, and the settings can be changed, suitably.

Server data management part 203 stores the print data received by communication management part 202 in memory 206. Also, server data management part 203 makes the character string of accumulation data as a before-correction character string from the extraction result of the difference by data comparison part 204, makes the character string of print data as an after-correction character string, and associates with the after-mentioned user information 220a. Also, server data management part 203 stores it in memory 206 as the after-mentioned revision history data 225. Also, server data management part 203 transmits correction candidate list 230, which is made by correction candidate making part 205, to MFP 100 via I/F 210. Also, server data management part 203 reflects correction candidate 225c in correction candidate list 230, which is received by communication management part 202, in revision history data 225 in memory 206. In this case, for example, correction candidate 225c with high selection frequency by the user in the MFP 100 side may be reflected in order to be located in higher order in the list.

Data comparison part 204 compares the print data received by communication management part 202 with the accumulation data, which is the past print data already stored by memory 206. Then, data comparison part 204 extracts the difference between the print data and the accumulation data if the concordance rate of the whole document is greater than or equal to fixed rate (for example, 80% or more.)
This is described later for details.

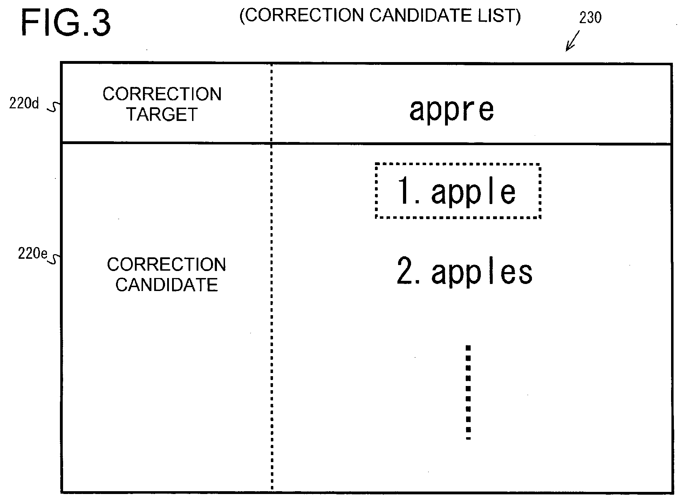

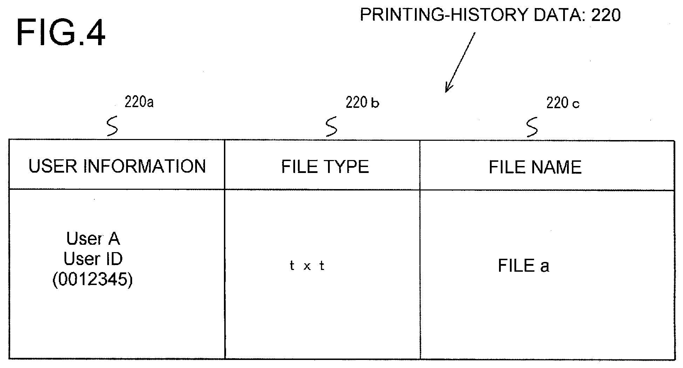

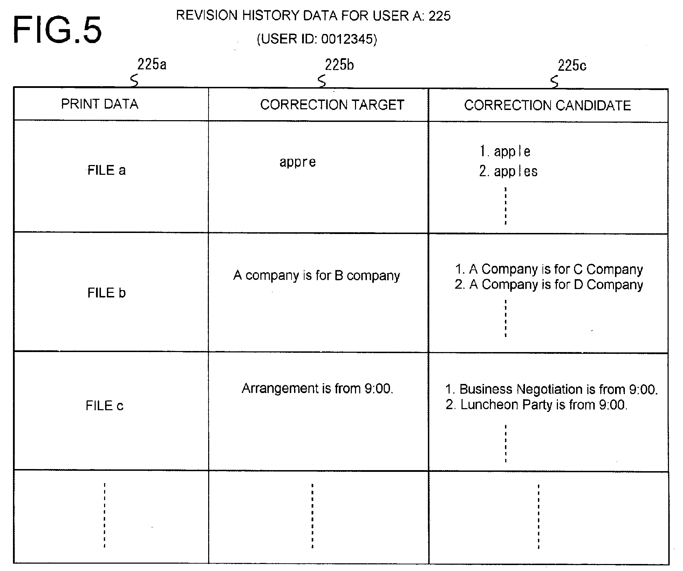

Correction candidate making part 205 makes correction candidate list 230 corresponding to the character string extracted by data comparison part 204. In after-mentioned FIG. 3, an example of correction candidate list 230 is shown. Correction candidate list 230, which is made, is transmitted to MFP 100 by communication management part 202 via I/F 210. Memory 206 has areas that stores printing history data 220 and revision history data 225. In after-mentioned FIG. 4, an example of printing history data 220 for each user is shown. Also, in FIG. 5, an example of revision history data 225 for each user is shown.

Then, with reference to FIG. 4, printing history data 220 for each user stored in memory 206 is explained. Printing history data 220 shown in the figure corresponds to user A, for example. Also, printing history data 220 manages the history of the print data that user A has printed in the past. User information 220a, file type 220b, and file name 220c are included in printing history data 220. Also, file type 220b and file name 220c are associated with user information 220a.

Then, with reference to FIG. 5, revision history data 225 for each user stored in memory 206 is explained. Revision history data 225 shown in the figure manages the contents that user A added correction to the already-printed print data in the past and the revision history about printing. In the revision history data 225, Print data 225a, correction target 225b, correction candidate 225c, or the like, are included. Also, correction target 225b, correction candidate 225c, or the like, are associated with user information 220a.

User information 220a has contents that show the user name and the user ID (0012345). File type 220b shows memorizing type of the print data, such as "txt." File name 220c is given name to the file of the print data as like "file a-c." Correction target 225b is the before-correction character string as mentioned above. Correction candidate 225c is the after-correction character string as mentioned above. In addition, for example, about the print data of files, a file name of "file a-1," "file aa," or the like, which is similar to "file a," in printing history data 220, it is distinguished and is managed, respectively.

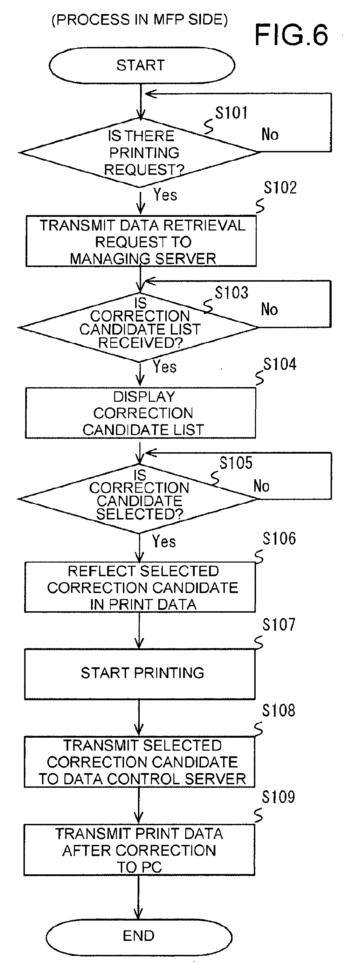

Then, with reference to FIG. 6, the process in the side of MFP 100 is explained.

### (Step S101)

Firstly, control part 101 determines whether or not communication management part 102 receives the printing request, which includes the print data, from client terminal 300 via I/F 115. If the printing request (the print data is included) is not received (Step S101: No), it waits for receiving. If it determines that the printing request (the print data is included) is received (Step S101: Yes), it moves to Step S102.

### (Step S102)

Device data management part 103 once stores the print data, which is received by communication management part 102, in memory 108. Also, device data management part 103 advances the data retrieval request to data management server 200. Here, the data retrieval request is advanced when requiring accumulation of the revision history of the print data and transmitting the after-mentioned correction candidate list 230 to data management server 200, as mentioned above. At this time, the data retrieval request including the print data received by communication management part 102 is transmitted to data management server 200 via I/F 115. In addition, in the data retrieval request, the user information, the file type, the file name, or the like, for the user who has transmitted the print data from client terminal 300 are included. User information is a user ID, or the like.

### (Step S103)

Control part 101 determines whether or not communication management part 102 receives correction candidate list 230 from data management server 200 via I/F 115. If correction candidate list 230 is not received (Step S103: No), it waits for receiving. If it determines that correction candidate list 230 is received (Step S103: Yes), it moves to Step S104. In addition, in Step S103, if correction candidate list 230 is not transmitted from data management server 200 and, for example, if the notice of no correspondence is received from data management server 200, MFP 100 may start printing of the print data, immediately, and subsequent processes may be ended.

### (Step S104)

Display management part 104 displays correction candidate list 230, which is received by communication management part 102, on display part 111.

### (Step S105)

Control part 101 determines whether or not operation accepting part 105 accepts selection of correction candidate 225c from correction candidate list 230 by operation in operation part 110. If selection of correction candidate 225c is not accepted (Step S105: No), it waits the selection of correction candidate 225c. If it determines that the selection of correction candidate 225c is accepted (Step S105: Yes), it moves to Step S106.

### (Step S106)

Correction reflecting part 106 reads the print data stored in memory 108 and reflects correction candidate 225c selected from correction candidate list 230 by the user. Thereby, correction of the print data is automatically performed before the start of printing.

### (Step S107)

Image formation part 107 performs image processing (rasterize) for the print data in which correction is performed by correction reflecting part 106. The data performed image processing (rasterize) is outputted to printer part 113, and the image is printed on a paper.

### (Step S108)

Device data management part 103 transmits correction candidate 225c, which is selected by the user, to data management server 200 via I/F 115.

### (Step S109)

Device data management part 103 transmits the after-correction print data to client terminal 300, which has been transmitted the print data, via I/F 115. As for the print data after this correction, correction candidate 225c is reflected by correction reflecting part 106. Then, the process is completed.

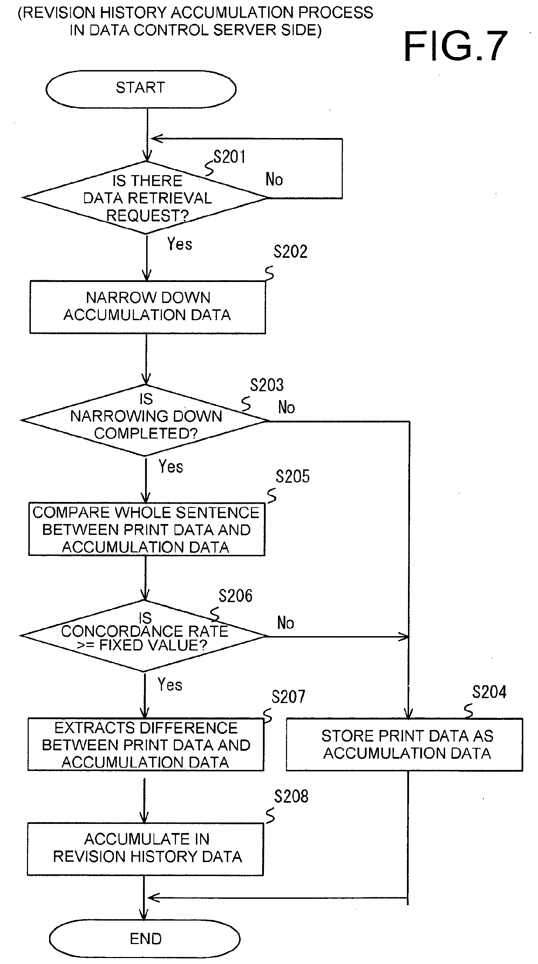

Then, as refer to FIG. 7, the revision history accumulation process in data management server 200 side is explained.

### (Step S201)

Control part 201 determines whether or not communication management part 202 receives the data retrieval request (the print data is included) from MFP 100 via I/F 210. If the data retrieval request is not received (Step S201: No), it waits for receiving. If it determines that the data retrieval request is received (Step S201: Yes), server data management part 203 stores the print data in memory 206. These print data are received by communication management part 202. Then, it moves to Step S202.

### (Step S202)

Data comparison part 204 narrows down the accumulation data in printing history data 220 to compare the print data with the accumulation data. When narrowing down the accumulation data, it is carried out by performing based on user information 220a, file type 220b, and file name 220c. In detail, data comparison part 204 extracts the accumulation data that has the same user information 220a and file type 220b as the print data has. Subsequently, data comparison part 204 extracts the accumulation data that has the same file name 220c as the print data has. In this case, if there is no accumulation data for the same file name 220c, data comparison part 204 searches a similar file, for example, "file a-1," or "file aa," which is similar to "file a."

### (Step S203)

If narrowing down of accumulation data is completed (Step S203: Yes), it moves to Step S205. If narrowing down of accumulation data is not completed (Step S203: No), it moves to Step S204.

### (Step S204)

If narrowing down of the accumulation data cannot be performed, a possibility is high that the print data is new. Therefore, server data management part 203 newly stores the print data as the accumulation data. In this case, the print data is associated with user information 220a and is stored.

### (Step S205)

Data comparison part 204 compares the whole sentence of the print data and the accumulation data, and computes the concordance rate of the whole document.

### (Step S206)

Data comparison part 204 determines whether the concordance rate is greater than or equal to the fixed rate (for example, 80% or more). If the concordance rate is greater than or equal to the fixed rate (for example, 80% or more) (Step S206: Yes), it moves to Step S207. If the concordance rate is not greater than or equal to the fixed rate (for example, 80% or more) (Step S206: No), it moves to Step S204. In Step S206, when the concordance rate is not greater than or equal to the fixed rate (for example, 80% or more) (Step S206: No), data management server 200 may notify no correspondence to MFP 100 side.

### (Step S207)

Data comparison part 204 extracts the difference between the print data and the accumulation data.

### (Step S208)

When the difference is extracted, server data management part 203 makes the character string extracted from the accumulation data as a before-correction character string and makes the character string extracted from the print data as an after-correction character string. Then, as shown in FIG. 5, server data management part 203 makes the before-correction character string to correction target 225b and makes the after-correction character string to correction candidate 225c. Then, server data management part 203 associates these with user information 220a and stores them as revision history data 225. In this way, the print data are compared with the accumulation data whenever it receives the data retrieval request (the print data is included) from MFP 100. Then, when the difference is extracted, correction target 225b and correction candidate 225c are accumulated in revision history data 225 and are managed. Also, whenever it receives the data retrieval request (the print data is included) from MFP 100, the print data from MFP 100 is stored as the accumulation data.

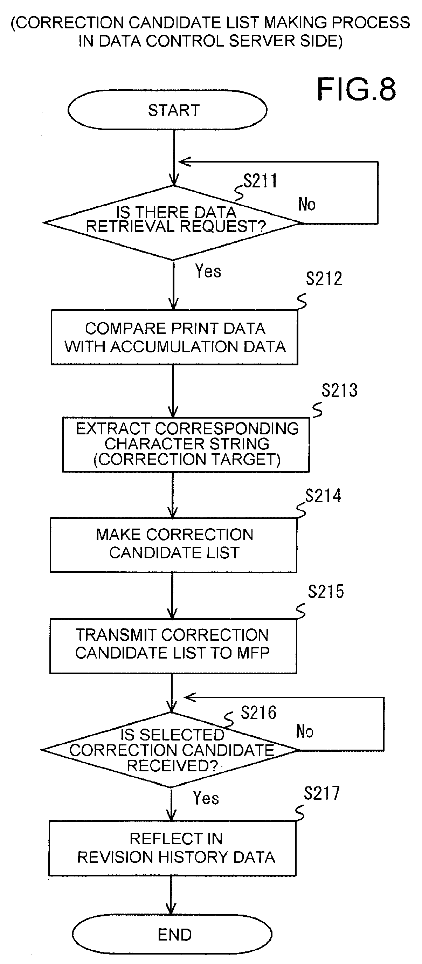

Then, with reference to FIG. 8, a making process of correction candidate list 230 in data management server 200 sides is explained. The following processes may be performed in parallel with the process in FIG. 7. Also, it may be carried out before or after the process in FIG. 7.

### (Step S211)

Control part 201 determines whether or not communication management part 202 receives the data retrieval request (the print data is included) from MFP 100 via I/F 210. If the data retrieval request is not received (Step S211: No), it waits for receiving. If it determines that the data retrieval request is received (Step S211: Yes), it moves to Step S212.

### (Step S212)

Server data management part 203 stores the print data, which is received by communication management part 202, in memory 206. Data comparison part 204 compares the print data received by communication management part 202 with revision history data 225, which is already stored in memory 206. In addition, when comparing the print data with the accumulation data, it narrows down revision history data 225 based on user information 220a and correction target 225b. In detail, server data management part 203 extracts revision history data 225 that has the same user information 220a as the print data has. In addition, if there is no correction target 225b similar to the print data received by communication management part 202, data management server 200 may notify no correspondence to MFP 100 side, and subsequent processes may be ended.

### (Step S213)

Server data management part 203 extracts the character string, which both are corresponded or are similar to, between the print data and the revision history data 225 by the comparison result.

### (Step S214)

Correction candidate making part 205 makes correction candidate list 230 corresponding to the character string extracted by data comparison part 204, and an example of correction candidate list 230 is shown in FIG. 3. Here, correction candidate making part 205 refers revision history data 225 as mentioned above. Correction candidate making part 205 registers correction target 225b corresponding to the character string, which is extracted by data comparison part 204, into correction candidate list 230. Also, correction candidate making part 205 registers correction candidate 225c corresponding to this correction target 225b with correction candidate list 230.

### (Step S215)

Server data management part 203 transmits correction candidate list 230, which is made by correction candidate making part 205, to MFP 100 via I/F 210.

### (Step S216)

Control part 201 determines whether or not communication management part 202 receives the selected correction candidate 225c from MFP 100 via I/F 210. The decision here is carried out after correction candidate list 230 is transmitted to MFP 100 and then correction candidate 225c is selected by the user. If correction candidate 225c is not received (Step S216: No), it waits for receiving.

### (Step S217)

If it determines that selected correction candidate 225c is received (Step S216: Yes), server data management part 203 reflects the correction candidate 225c in revision history data 225. At this time, server data management part 203 reflects in order that correction candidate 225c with high selection frequency is to be located in the high order of the list. Then, the process is ended.

In addition, in the process flow mentioned above, if there is designation of the accumulation data, which is a comparison object, from client terminal 300 to data management server 200, subsequent processes may be performed from Step S212 without waiting for the data retrieval request in Step S211.

Thus, in the present embodiment, communication management part 102 receives the print data from client terminal 300 and correction candidate list 230 including correction target 225b and correction candidate 225c from data management server 200. Display management part 104 displays correction candidate list 230 on display part 111. Operation accepting part 105 accepts selection of correction candidate 225c of correction candidate list 230 displayed on display part 111. Correction reflecting part 106 reflects selected correction candidate 225c in the print data. Image formation part 107 performs image processing for print data, which correction candidate 220e is reflected by correction reflecting part 106, and makes it output to printer part 113.

Thereby, the correction candidate selected for the print data before the start of printing can be reflected, automatically. Therefore, even if it is after correcting the correction part, it can be unnecessary to reprint of the print data. Also, because of making it unnecessary to reprint of the print data, the futility of the paper used by reprinting can be reduced.

Also, in the present embodiment, device data management part 103 stores the print data from client terminal 300 in memory 108, which is a memory part. Correction reflecting part 106 transmits the print data in which the correction candidate is reflected to client terminal 300 via communication management part 102. Therefore, in the client terminal 300 side, the before-correction print data can be overwritten with the after-correction print data and can be stored.

As summarized, in the typical print data editing device as mentioned above, in case of correction of print data, separately, the correction instructions written by a correcting person are converted to data. Then, the print data in the original document and the correction-instructions data are compared by a layer. Therefore, checking of a correction place becomes easy, and correcting work is simplified. However, there is a problem that in order to convert the correction instructions written by the correcting person to the data, the excessive operations for scanning correction instructions is to be required. Also, correction instructions written by the correcting person are human-made operations. Therefore, there is a problem that it might miss even if a similar mistake occurs. Also, there is a problem that, after checking the correction place and performing the correction, it is necessary to re printing of the print data.

On the other hand, another typical printer as mentioned above compares a print data formerly registered into data memory with a before-correction data. Therefore, the excessive operations for scanning the correction instructions in the above-mentioned typical apparatus become unnecessary. Further, missing is to be avoided even if the similar mistake occurs. However, there is a problem that it is necessary to reprint the print data after correcting a correction part.

The present disclosure is accomplished in view of such a situation, and aims at providing a text editing apparatus that can cancel the above-mentioned problem.

According to the text editing apparatus in the present disclosure, the correction candidate, which is selected for the print data before the start of printing, is reflected, automatically. Therefore, even if it is after correcting the correction part, it can be unnecessary to reprint the print data.

In addition, the present embodiment is explained in a case that the text editing apparatus in the present disclosure is MFP 100. However, not only this example but a text editing apparatus may be applied to a printer or a multifunction printer.

Also, either of file type 220b or file name 220c do not need to be included in printing history data 220. In this case, in Step S202 as shown in FIG. 7, data comparison part 204 can narrow down the accumulation data. Data comparison part 204 performs the process for file type 220b and file name 220c based on the item and user information 220a, which are included in printing history data 220.

Also, the user may register correction target 225b and correction candidate 225c into revision history data 225, previously. In this case, a user terminal, such as a personal computer, access data management server 200 and displays the input screen provided by data management server 200. Correction target 225b and correction candidate 225c are inputted in the input screen by the user. Then, data management server 200 registers correction target 225b and correction candidate 225c, which are inputted.

### <A second embodiment>

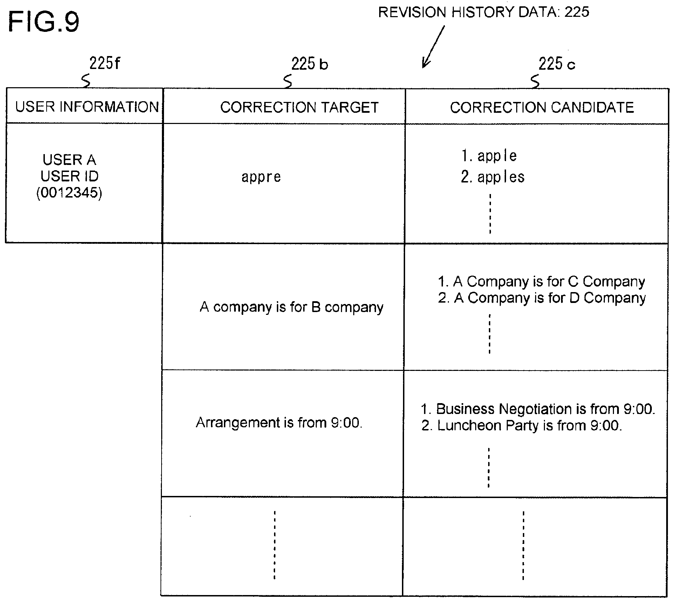

Then, as refer to FIG. 9, it explains a print data storage apparatus according to a second embodiment in the present disclosure.

In the present embodiment, data management server 200 as shown in FIG. 2 functions as the print data storage apparatus. Also, server data management part 203 in the present embodiment functions as a server data management part. Also, in the time of a login process, operation part 110 in MFP 100 obtains user ID.

Here, with reference to FIG. 9, revision history data 225 for each user stored in memory 206 is explained. Revision history data 225 shown in the figure manages the revision history about the contents that user A has added correction to the print data, which has printed in the past. Correction target 225b, correction candidate 220c, user information 225f, and the like, are included in this revision history data 225. Also, correction target 225b, correction candidate 225c, and the like, are associated with user information 225f.

According to the present embodiment, server data management part 203 is associated by user information 220a, and stores print data in memory 206 that is a memory part as accumulation data. Data comparison part 204 compares the accumulation data with new print data. Then, data comparison part 204, based on the result of the comparison by server data management part 203, makes the character string extracted from accumulation data as a before-correction character string, makes the character string extracted from new print data as an after-correction character string, associates with user information, and manages it. Thereby, without carrying out the excessive operations as scanning correction instructions, correction candidate 225c for correction target 225b in connection with the correcting work of print data can be accumulated, automatically.

Also, in the present embodiment, data comparison part 204 compares the print data with the accumulation data for the whole sentences. Data comparison part 204 extracts the difference between print data and the accumulation data if the concordance rate of the whole document is greater than or equal to the fixed value (for example, 80% or more.)

Therefore, narrowing down of a different character string between the accumulation data and the print data can be ensured. Also, if the concordance rate of the whole document is not greater than or equal to the fixed value, the print data can be newly memorized as the accumulation data.

Also, in the present embodiment, server data management part 203, based on the extraction result of the difference by data comparison part 204, makes a before-correction character string as a correction target, makes an after-correction character string as a correction candidate, and accumulates them as revision history data 225. Therefore, accumulation and acquisition of correction candidate 220e for correction targets 220d can be ensured.

Also, in the present embodiment, user information 220a, file type 220b of print data, and file name 220c of print data are included in printing history data 220. Data comparison part 204 narrows down the accumulation data to be compared with the print data by either of user information 220a accompanying with the print data, file type 220b of the print data, and file name 220c of the print data. Therefore, the accumulation data to be compared with the print data can be narrowed down, certainly and easily.

Also, correction candidate 225c for correction target 225b of revision history data 225 in the present embodiment is associated with user information 220a. Therefore, the input mistake corresponding to the user characteristics, or the like, is manageable for each user.

In summary, according to the print data storage apparatus in the present embodiment, data management part, based on the result of the comparison by a data comparison part, makes the character string extracted from the accumulation data as the before-correction character string. Also, it makes the character string extracted from new print data as the after-correction character string, associates with user information, and manages. Therefore, without carrying out the excessive operations of scanning correction instructions, the correction candidate for the correction target in connection with the correcting work of the print data can be accumulated, automatically.

In addition, according to the present embodiment, MFP 100 is illustrated as advancing the data retrieval request to data management server 200. However, it may be a printer or a multifunction printer as a substitute for MFP 100.

## Claims

1. A text editing apparatus **characterized in that** comprising:
a communication management part (102) that receives a print data from a client terminal and a correction candidate list including a correction target and a correction candidate from a data management server;
a display management part (104) that displays the correction candidate list on a display part;
a selection accepting part (105) that accepts selection of the correction candidate in the correction candidate list displayed on the display part;
a correction reflecting part (106) that reflects selected correction candidate to the print data; and
an image formation part (107) that performs image processing for the print data reflected the correction candidate and outputs to a printer part (113).

2. The text editing apparatus according to claim 1, **characterized in that** further comprising
a device data management part (103) that stores the print data from the client terminal in a memory part, and
the device data management part (103) transmits the print data reflected the correction candidate by the correction reflecting part to the client terminal via the communication management part.

3. A print data storage apparatus **characterized in that** comprising:
a server data management part (203) that associates a print data with user information and stores in a memory part as an accumulation data; and
a data comparison part (204) that compares the accumulation data with new print data, and
the server data management part (203), based on result of comparison, makes a character string extracted from the accumulation data as a before-correction character string, makes a character string extracted from the new print data as an after-correction character string, associates with the user information, and manages.

4. The print data storage apparatus according to claim 3, **characterized in that**
the data comparison part (204) compares the print data with a whole sentence of the accumulation data, and when a concordance rate of whole document is greater than or equal to a fixed value, extracts difference between the print data and the accumulation data.

5. The print data storage apparatus according to claim 4, **characterized in that**
the server data management part (203), based on extraction result of the difference, makes the before-correction character string as a correction target, makes the after-correction character string as a correction candidate, and accumulates as a revision history data.

6. The print data storage apparatus according to claim 5, **characterized in that**
the server data management part (203) manages a printing history data including the user information, a file type of and the print data, and a file name of the print data, and
the data comparison part (204) narrows down the accumulation data in comparison with the print data by either of the user information, the file type, and the file name associated with the print data.
